# EUROPEAN PATENT APPLICATION

(11) **EP 4 235 556 A1**
(43) Date of publication of application: **30.08.2023**
(21) Application number: 23305056.6
(22) Date of filing: 16.01.2023
(51) Int. Cl.: G06Q 30/0208, G06Q 30/0601, G06Q 50/30, G06Q 30/0207

(54) **EXTENSION OF FUNCTIONALITY FOR HIGHLY SCALABLE COMPUTING INFRASTRUCTURE**

(30) Priority: 23.02.2022 US 202217678746
(71) Applicant: Amadeus S.A.S., 06410 Biot (FR)
(72) Inventor: CAZEAUX, Olivier, 06160 Antibes (FR); FRADES, Marie-Celine, Victoria, 06210 Mandelieu La Napoule (FR); DOUTRES, Nathalie, 06600 Antibes (FR)
(74) Representative: Samson & Partner Patentanwälte mbB

(57) **Abstract**

A system includes: a profile repository containing, for a client identifier, client attributes including an account balance defined in a first exchange medium, and an auxiliary classification attribute; a response generator to receive a request containing search parameters from a client device corresponding to the client identifier, and, synchronously with the request, to: obtain, based on the search parameters, an item identifier and an item cost in a second exchange medium; select, based on the auxiliary classification attribute, a conversion factor between the first and second exchange media; and send a response to the client device, the response containing the item identifier, the item cost, and a converted item cost in the first exchange medium, according to the conversion factor; and a classifier to, asynchronously with the request, generate an updated auxiliary classification attribute, and replace the auxiliary classification attribute in the repository with the updated auxiliary classification attribute.

## Description

### FIELD

The specification relates generally to highly scalable computing infrastructure, and specifically to mechanisms for extending the functionality of such infrastructure.

### BACKGROUND

Certain computing systems perform functionality that involves receiving, processing, and responding to large volumes of requests (e.g., thousands of requests per hour). Generating responses to such requests may further be computationally complex, e.g., to a significantly greater degree than returning previously stored and indexed search results. Implementing such systems may involve deploying specifically-designed programming instructions to sufficient computing resources to enable the complex processing of high request volumes while maintaining certain performance targets, e.g. in the form of response times, request handling rates, and the like.

Modifying such systems to extend the functionality thereof (e.g., to respond to an additional type of request, to generate an additional type of response, or the like) may be a costly, resource-intensive exercise, resulting from the need to deploy the extended functionality with the same level of scalability and/or availability as mentioned above.

### SUMMARY

An aspect of the specification provides a request-handling system, comprising: a profile repository containing, for a client identifier, (i) a set of client attributes including an account balance defined in a first exchange medium, and (ii) an auxiliary classification attribute; a response generator configured to receive a request containing search parameters from a client device corresponding to the client identifier, and, synchronously with the request, to: (i) obtain, based on the search parameters, an item identifier and an item cost in a second exchange medium; (ii) select, based on the auxiliary classification attribute, a conversion factor between the first exchange medium and the second exchange medium; and (iii) send a response to the client device, the response containing the item identifier, the item cost, and a converted item cost in the first exchange medium, according to the conversion factor; and a classifier configured, asynchronously with the request, to generate an updated auxiliary classification attribute, and replace the auxiliary classification attribute in the repository with the updated auxiliary classification attribute.

According to some embodiments of this aspect:
- the response generator is configured to obtain the item identifier based on the client attributes and the search parameters.
- the response generator is configured to select the conversion factor based on the search parameters, the auxiliary classification attribute, and the set of client attributes.
- the auxiliary classification attribute is selected from a set of auxiliary classification attributes; and wherein the profile repository contains, for each of a plurality of additional client identifiers, a corresponding set of client attributes and a selected one of the auxiliary classification attributes.
- the classifier is configured to generate an updated auxiliary classification attribute, by: obtaining a copy of the set of client attributes; and selecting the updated auxiliary classification attribute from the set of auxiliary classification attributes based on the set of client attributes.
- the response generator is configured to select the conversion factor based on a plurality of conversion rules corresponding to respective search parameters, auxiliary classification attributes, and client attributes.
- the classifier is configured to generate an updated conversion factor, and provide the updated conversion factor to the response generator.
- generation of the updated conversion factor is asynchronous with receipt of the request.
- the classifier is further configured, in order to generate the updated conversion factor, to obtain a set of historical transaction data.

Another aspect of the specification provides a method including: storing, in a profile repository, for a client identifier, (i) a set of client attributes including an account balance defined in a first exchange medium, and (ii) an auxiliary classification attribute; at a response generator, receiving a request containing search parameters from a client device corresponding to the client identifier, and synchronously with the request: (i) obtaining, based on the search parameters, an item identifier and an item cost in a second exchange medium; (ii) selecting, based on the auxiliary classification attribute, a conversion factor between the first exchange medium and the second exchange medium; and (iii) sending a response to the client device, the response containing the item identifier, the item cost, and a converted item cost in the first exchange medium, according to the conversion factor; and at a classifier, asynchronously with the request: generating an updated auxiliary classification attribute; and replacing the auxiliary classification attribute in the repository with the updated auxiliary classification attribute.

According to some embodiments of this aspect,
- obtaining the item identifier includes obtaining the item identifier based on the client attributes and the search parameters.
- selecting the conversion factor is based on the search parameters, the auxiliary classification attribute, and the set of client attributes.
- the auxiliary classification attribute is selected from a set of auxiliary classification attributes; and wherein the profile repository contains, for each of a plurality of additional client identifiers, a corresponding set of client attributes and a selected one of the auxiliary classification attributes.
- generating the updated auxiliary classification attribute comprises:
   obtaining a copy of the set of client attributes; and
   selecting the updated auxiliary classification attribute from the set of auxiliary classification attributes based on the set of client attributes.
- selecting the conversion factor is based on a plurality of conversion rules corresponding to respective search parameters, auxiliary classification attributes, and client attributes.
- the method further comprises, at the classifier, generating the updated conversion factor, and providing the updated conversion factor to the response generator.
- the generation of the updated conversion factor is asynchronous with receipt of the request.
- generating the updated conversion factor includes: obtaining a set of historical transaction data.

### BRIEF DESCRIPTIONS OF THE DRAWINGS

Embodiments are described with reference to the following figures.
FIG. 1 is a diagram illustrating a system for extending the functionality of highly scalable computing infrastructure.
FIG. 2A is a diagram illustrating certain internal components of the classifier of FIG. 1.
FIG. 2B is a diagram illustrating certain internal components of the response generator of FIG. 1.
FIG. 3 is a flowchart of a request handling method.
FIG. 4 is a diagram illustrating example performances of blocks 340, 345, and 350 of the method of FIG. 3.
FIG. 5 is a diagram illustrating example performances of blocks 355 and 310 of the method of FIG. 3.

### DETAILED DESCRIPTION

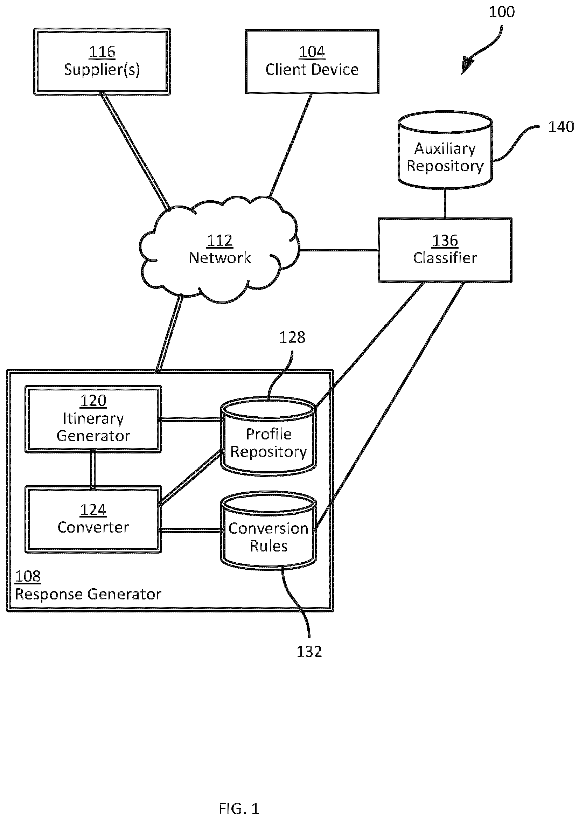

FIG. 1 illustrates a request-handling system 100. The handling of requests in the system 100 includes, in general, the generation of such requests by a client computing device 104, and the generation of responses to such requests by a response generator 108 implemented as one or more additional computing devices. Although the specific nature of the requests and responses is not particularly limited, for the purpose of illustration, in the discussion below the requests are requests for items including travel-related products and services. Such products and services include, for example, airline tickets, hotel reservations, rental vehicle reservations, and the like.

In the above context, the client device 104 may therefore be a computing device operated by or on behalf of an individual traveler or group of travelers who will make use of the above-mentioned items. The client device 104 may therefore be operated directly by the traveler, or by a travel agency on behalf of the traveler. Requests generated by the client device 104 are transmitted to the response generator 108 via a network 112, including any suitable combinations of local and wide-area networks.

An example request generated by the client device 104 includes search parameters such as an origin location and a destination location for a flight, as well as a departure date. Various other search parameters can also be included in the request, such as a return date, a number of passengers, an identifier of the traveler (e.g., a name, account identifier, or other suitable identifier distinguishing the traveler from others), and the like. The system 100 includes at least one supplier subsystem 116 operated by a corresponding supplier entity responsible for provision of the items, such as an airline in this example. The supplier subsystems 116 therefore each store and process data defining the items (e.g., flights) provided by the corresponding operating entities. In some examples, the response generator 108 itself can host such storage and processing functions on behalf of one or more suppliers, and thus in effect implements one or more supplier subsystems 116. In other examples, a centralized system such as a Global Distribution System (GDS) may manage data for more than one supplier.

As will be apparent to those skilled in the art, a wide variety of items may be available at any given time, from a number of distinct supplier subsystems 116. Such items have widely varying combinations of characteristics (e.g., origin and destination locations and travel dates, for flights), as well as frequently changing availability and pricing. The range of possible combinations of search parameters is also large, as will be evident to those skilled in the art. Further still, certain characteristics of the items may be dynamically defined based on properties of the request itself, e.g., based on the identity of the requester, the timing of the request (e.g., which day of the week the request occurs on), and the like. The availability and pricing of items are examples of characteristics that may be dynamically defined as noted above. For instance, certain seats on a given flight may be made available only to certain travelers.

The response generator 108 is configured to obtain, via data exchanges with the supplier subsystems 116, a subset of the available items that match the search parameters as closely as possible, and that are also expected to be relevant to the operator of the client device 104. Relevance may be assessed in a wide variety of ways (including mechanisms based on attributes of the traveler). As will be apparent, more relevant search results may increase the likelihood of a return on the computational resources expended in processing the request, in the form of a purchase of one or more items initiated by the client device 104.

The items obtained as described above each include costs defined in a given medium of exchange. The medium of exchange is typically monetary, e.g., in a currency corresponding to the jurisdiction in which the client device 104 is located. The cost to purchase an item in this medium of exchange can also be referred to as the cash value of the item. As will be understood by those skilled in the art, at least some of the items defined within the system 100 may also be purchased with a distinct medium of exchange that is not a national or regional currency. Such a medium of exchange can include, for example, loyalty points (e.g., also referred to as rewards points), which may have value only within the system 100, and/or may be usable only for the purchase of items provided by certain supplier subsystems 116, or the like. Points (or any other suitable denomination in this second exchange medium) may be obtained by travelers through various commercial arrangements, the details of which are not relevant to the present discussion. Whatever the origin and operation of the points-based medium of exchange, certain items can be purchased by travelers using either or both of cash and points. The cost to purchase an item in the second medium of exchange introduced above can also be referred to as the points value of the item.

Prior to returning a set of items to the client device 104, the response generator 108 can therefore also be configured to determine a cost in both of the above exchange media. That is, the response generator 108 can determine a cash value of the item, and convert the cash value to a points value, before transmitting the search results (e.g., including both values) to the client device 104. More specifically, the response generator can include an itinerary generator 120, configured to obtain a set of items relevant to the search parameters, and a converter 124. The itinerary generator 120 can call the converter 124 to generate converted points values for items, e.g., when a client identifier included in the search request corresponds to a traveler with an available balance in the points exchange medium. For example, the system 100 can include a profile repository 128 (which can also be implemented as more than one distinct repositories) containing profile data for each of a plurality of client identifiers. The profile data can include, among other information, an indication of whether a given client identifier is associated with a points-based exchange medium. The repository 128 can also include a balance associated with the client identifier.

When the itinerary generator 120 detects that the client identifier has an available points balance (or simply has access to a given points-based exchange medium, whether or not a non-zero balance is available), the itinerary generator 120 can request a conversion factor for each obtained item from the converter 124. Conversion factors need not be fixed. For example, the repository 128 can indicate a membership level for the client identifier, which may affect the conversion factor. Further, due to promotions or other commercial factors, the conversion factor for a given client identifier may vary between different suppliers (e.g., such that the conversion of points to cash is more favorable for items from a particular supplier).

The converter 124 stores or otherwise accesses a set of conversion rules 132 to determine one or more conversion factors for the items obtained by the itinerary generator 120. The conversion rules 132 define a plurality of conversion factors, and sets of conditions to be satisfied for the use of each conversion factor. Those conditions may depend, for example, on characteristics of the items (locations, time of delivery, supplier identifiers, and the like) as well as on characteristics of the traveler, which may be retrieved from the profile repository 128 by the converter 124. For example, the conversion rules 132 may define distinct conversion factors for each of a set of traveler membership levels, such that travelers with higher membership levels in a rewards program or other commercial arrangement receive more advantageous conversion rates between cash and points.

The generation of responses to requests therefore involves the processing of large volumes of data. Further, the fact that certain item characteristics, and certain conditions defined in the conversion rules 132, are dynamic, favors real-time processing of requests, as opposed to the use of pre-computed responses. Still further, the response generator 108 and the supplier subsystems 116 may face elevated rates of requests (e.g., thousands or tens of thousands of requests per hour), each of which is processed substantially in real-time (i.e. the response generator 108 performs these functions synchronously with the request). The processing of requests is therefore costly in terms of computational resources (e.g., processor cycles, data storage and bandwidth requirements). The computing device(s) implementing the response generator 108 (including both the itinerary generator 120 and the converter 124), as well as the computing devices implementing the supplier subsystems 116, the profile repository 128, and the conversion rules 132, are therefore deployed in a manner that enables scalability and high availability. Entities shown in FIG. 1 that are deployed to enable highly scalable and available operation are indicated in double lines. Such a deployment complicates modifications to those components of the system 100, e.g., to implement additional functionality during the generation of responses to client requests.

Various modifications to the response-generation functionality outlined above may nevertheless be desirable, however. For example, the points-based exchange medium mentioned earlier may be employed by suppliers and/or other entities to encourage travelers to purchase certain items, items from certain suppliers, or use other services that are commercially beneficial to such entities. The converter 124 and the dynamic conversion rates noted above are implemented to provide a degree of flexibility in optimizing revenue derived from the purchasing of items by travelers using the points-based exchange medium.

Entities involved in operating the system 100 (e.g., airlines, financial institutions, and the like) may desire additional flexibility in the computation of conversions between cash and point values performed by the converter 124. For example, such entities may seek to determine conversion factors between cash and points values in a more granular manner than outlined above, e.g., considering not only item characteristics and traveler membership levels. Examples of other information that may be considered in determining conversion factors include transaction history data, such as data indicating the total value of recent (e.g., within the past six months) purchases made by a traveler through the system 100. Transaction history data can further include transaction frequencies, trends in transaction values and/or frequencies, and the like. Various other traveler-related data may also be considered, such as status indicators for each traveler indicating whether the traveler is a holder of a credit card or other service operated by an entity involved in the operation of the system 100.

The business logic intended to determine conversion factors using the above information is not relevant to the present discussion, nor is the selection of the specific pieces of information used in any given implementation of the system 100. Of particular note, however, is that the introduction or modification of any additional piece of information in the determination of conversion factors by the converter 124 may be prohibitively costly, given the technical limitations imposed by the need for certain components of the system 100 to be highly scalable and highly available.

For example, modifying the system 100 to consider five additional traveler attributes, e.g., selected from historical transaction data and the like, involves a number of modifications to the components illustrated in double lines in FIG. 1. In particular, numerous additional conversion rules 132 may need to be implemented, to handle combinations of the newly considered traveler attributes and previously considered attributes. The storage requirements of the repository of conversion rules 132 may therefore expand significantly. In turn, the number of computations performed by the converter 124 to generate a conversion factor for each item may increase significantly, as will the memory and/or bandwidth requirements, e.g., for connections between the processing hardware of the converter 124, and the conversion rules 132.

The information forming the basis of expanded conversion factor computation may not be hosted in the profile repository, in some examples. Thus, implementing such a functional extension of the system 100 may involve expansion of the profile repository 128, with accompanying costs associated with greater bandwidth consumption for connections between the repository 128 and the converter 124. Alternatively, the implementation can involve preparing an external repository, which was not previously subject to the scalability and availability constraints noted above, to satisfy such constraints. As will be apparent, either of the above alternatives impose ever greater load on the converter 124 for data retrieval and processing, in addition to increasing the computational load on the computing devices hosting the profile repository 128 and any such external repositories.

In other words, regardless of the commercial reasoning behind the selection of additional information on which to base the conversion factor computation, and regardless of which additional information is to be considered, implementing any extension to the functionality of the converter 124 is technically challenging because it involves significant modifications to several highly scalable components of the system 100.

To enable the extension of converter functionality in the system 100, while mitigating the technical obstacles to implementing such extension, the system 100 also includes a classifier 136 coupled to the network 112. The classifier 136, in turn, stores or otherwise accesses an auxiliary repository 140, which can contain data beyond that stored in the repository 128, such as historical transaction data, status indicators and the like as noted above.

As will be seen in the discussion below, implementation of the classifier 136 and the auxiliary repository 140 enables the extension of certain functionality in the highly-scalable components of the system 100, with minimal modifications to those components. In particular, the classifier processes, asynchronously from the request handling process set out above, data in either or both of the profile repository 128 and the auxiliary repository 140, to determine an auxiliary classification attribute for at least some travelers. That is, numerous elements of additional data can be combined into one value (the auxiliary classification attribute). That value can then be periodically synchronized to the profile repository 128. Further, the conversion rules 132 can be periodically updated to make use of the auxiliary classification attribute.

As will be apparent, the storage of a single additional value for each traveler in the profile repository 128, and the processing of a limited number of additional conditions in the conversion rules 132 by the converter 124, limits the impact of such a functional extension on the highly scalable components of the system 100. The classifier 136 and the auxiliary repository 140, meanwhile, are decoupled from the real-time request handling process, and therefore need not be subject to the same design constraints imposed by high scalability and availability. Computation of the auxiliary classification attributes, modification of the algorithms according to which such computation is implemented, and modification of the source data from which the auxiliary classification attributes are computed, therefore have little or no impact on the request handling processes implemented by the response generator 108 and the supplier subsystems 116, beyond periodically updating a small portion of the content in either or both of the repositories 128 and 132.

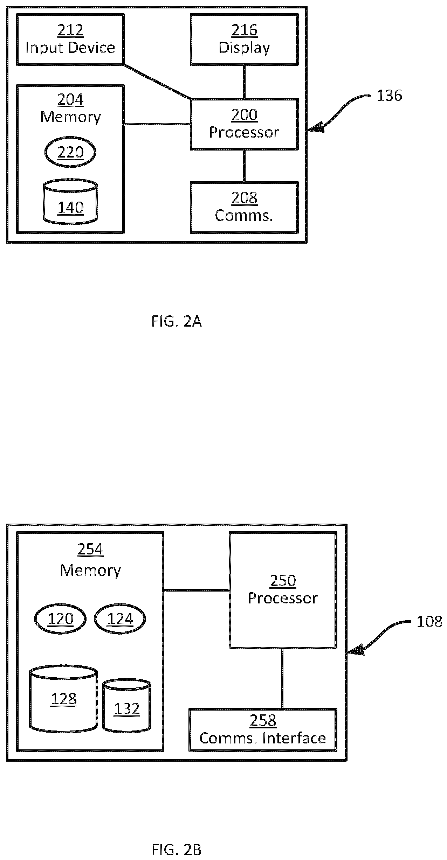

Before discussing the operation of the system 100 in greater detail, certain internal components of the response generator 108 and the classifier 136 will be described, with reference to FIGS. 2A and 2B.

Referring in particular to FIG. 2A, the classifier 136 includes at least one processor 200, such as a central processing unit (CPU) or the like. The processor 200 is interconnected with a memory 204, implemented as a non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The processor 200 and the memory 204 are generally comprised of one or more integrated circuits (ICs).

The processor 200 is also interconnected with a communications interface 208, which enables the classifier 136 to communicate with the other computing devices of the system 100 via the network 112. The communications interface 208 therefore includes any necessary components (e.g., network interface controllers (NICs), radio units, and the like) to communicate via the network 112. The specific components of the communications interface 208 are selected based on upon the nature of the network 112.

The classifier 136 can also includes an input device 212, such as a keyboard, touch screen, mouse, or the like, and a display 216 controllable by the processor 200 to render various information, e.g., stored in the memory 204. The classifier 136 can also include other output devices in addition to the display 216 in some examples, such as a speaker, or the like. The components of the classifier 136 mentioned above can be implemented as a tablet computer, desktop computer, smart phone, or the like.

The memory 204 stores a plurality of computer-readable programming instructions, executable by the processor 200, in the form of various applications, including a classification application 220. As will be understood by those skilled in the art, the processor 200 executes the instructions of the application 220 (and any other suitable applications) in order to perform various actions defined by the instructions contained therein. In the description below, the processor 200, and more generally the classifier 136, are said to be configured to perform those actions. It will be understood that they are so configured via the execution (by the processor 200) of the instructions of the applications stored in memory 204.

Execution of the application 220 configures the classifier 136 to retrieve and process data from either or both of the profile repository 128 and the auxiliary repository 140, and generate an auxiliary classification attribute for at least one traveler. The resulting auxiliary classification attribute can be synchronized with the profile repository 128.

Turning to FIG. 2B, the response generator 108 includes at least one processor 250, such as a central processing unit (CPU) or the like. The processor 250 is interconnected with a memory 254, implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The processor 250 and the memory 254 are generally comprised of one or more integrated circuits (ICs).

The processor 250 is also interconnected with a communications interface 258, which enables the response generator 108 to communicate with the other computing devices of the system 100 via the network 112. The communications interface 258 therefore includes any necessary components (e.g., network interface controllers (NICs), radio units, and the like) to communicate via the network 112. The specific components of the communications interface 258 are selected based on upon the nature of the network 112. The response generator 108 can also include input and output devices connected to the processor 250, such as keyboards, mice, displays, and the like (not shown).

The components of the response generator 108 mentioned above can be deployed in a single enclosure, or in a distributed format. In some examples, therefore, the response generator 108 includes a plurality of processors, either sharing the memory 254 and communications interface 258, or each having distinct associated memories and communications interfaces.

The memory 254 stores a plurality of computer-readable programming instructions, executable by the processor 250. The instructions stored in the memory 254 include respective applications implementing the functionality of the itinerary generator 120, and the converter 124. In other examples, each of the itinerary generator 120 and the converter 124 can be implemented in separate computing devices, or sets of distributed computing devices.

The memory 254 also stores the repositories 128 and 132 in the illustrated example. As noted earlier, in other examples the repositories 128 and 132 can be stored at a distinct computing device or other network-accessible storage device, rather than in local memory 254 at the response generator 108.

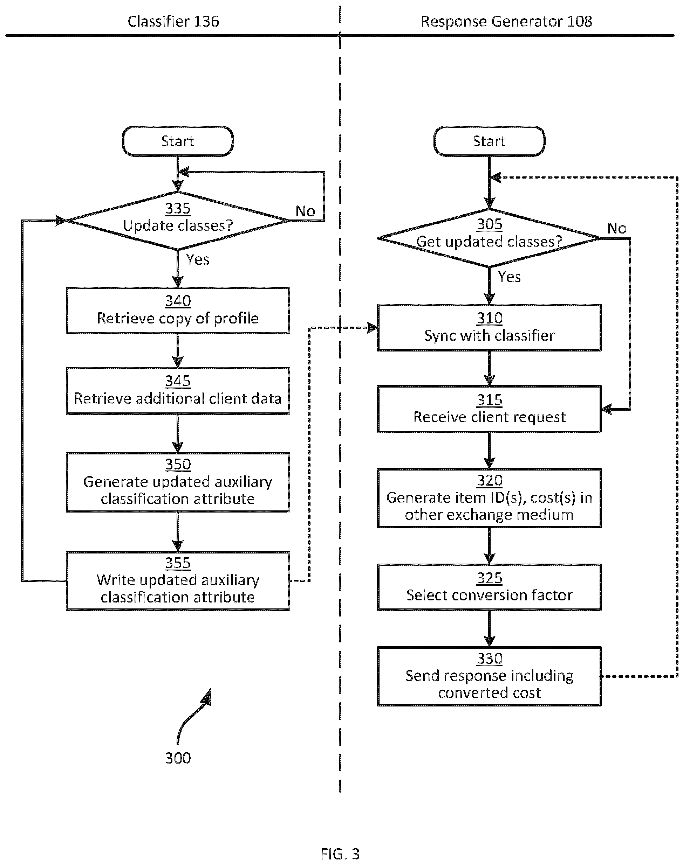

Turning to FIG. 3, an extensible response-handling method 300 is illustrated. The method 300 will be described in conjunction with its example performance in the system 100. Specifically, certain blocks of the method 300 as described below are performed by the response generator 108, while other blocks of the method 300 are performed by the classifier 136. In particular, as indicated in FIG. 3, the blocks of the method 300 arranged on the right-hand side of the flowchart are performed by the response generator 108, while the blocks of the method 300 arranged on the left-hand side of the flowchart are performed by the classifier 136.

While the right- and left-hand portions of the method 300 are shown with a "start" position that is aligned horizontally, it will be clear in the discussion below that due to the decoupled nature of the actions taken by the classifier 136 from those taken by the response generator 108, no specific relative timing of those actions is required. Indeed, in the example performance of the method 300 discussed below, the functions implemented by the response generator 108 will be discussed as occurring prior to the functions of the classifier 136.

Specifically, at block 305, the response generator 108 (e.g., the converter 124) can be configured to determine whether to obtain updated auxiliary classification attributes from the classifier 136. The determination at block 305 can be based on, for example, a predetermined schedule, a current computational load on the response generator 108 imposed by the processes involved in responding to client device requests, or the like. In general, therefore, the performance of block 305 enables the response generator 108 to manage the incorporation of new data (in the form of auxiliary classification attributes) into the profile repository to mitigate impacts on performance of the primary request-handling role fulfilled by the response generator 108.

When the determination at block 305 is affirmative, the response generator 108 proceeds to block 310, at which a portion of the profile repository 128 is synchronized with the classifier 136 and the auxiliary repository 140, to obtain auxiliary classification attributes for at least a subset of travelers represented in the profile repository 128. When the determination at block 305 is negative, however, the response generator 108 skips block 310, and proceeds to block 315, at which the processing of client requests begins. As will be discussed below, blocks 315, 320, 325, and 330 implement the generation of candidate items in response to a client request, the generation of converted (points) values for such items, and the provision of the items and costs to the client device 104.

Prior to discussing the handling of client requests at the response generator 108, generation of auxiliary classification attributes by the classifier 136 will be described in greater detail. In particular, at block 335 the classifier 136 is configured to determine whether to generate updated auxiliary classification attributes for some or all of the travelers represented in the profile database 128. The determination at block 335 can include the detection of input, e.g., received from an operator of the classifier 136, including a command to update one or more auxiliary classification attributes. In some examples, in which the generation of auxiliary classification attributes is automated, the determination at block 335 can be based on a schedule (e.g., auxiliary classification attributes can be updated once per month, or the like) or other detectable event.

When the determination at block 340 is affirmative, the classifier 136 is configured to retrieve data corresponding to at least one client identifier. The generation of updated auxiliary classification attributes can be done in a batch-wise process, in which auxiliary classification attributes are generated for a number of distinct client identifiers (e.g., travelers in this example). In other examples, the generation of an updated auxiliary classification attribute can be performed for a single client identifier at a time.

The retrieval of data includes, in this example, retrieving a copy of profile data for the relevant client identifiers from the profile repository 128 at block 340. The use of a local copy of profile data enables the classifier 136 to perform additional updates to auxiliary classification attributes, while minimizing further data retrieval from the profile repository 128 (e.g., retrieving only data that has changed since the previous performance of block 340), thus reducing the computational demands imposed on the profile repository 128 by the classifier 136. The retrieval of data can also include retrieving additional data, such as historical transaction data and the like, from the auxiliary repository 140 or other data sources, at block 345. In some examples, one or the other of blocks 340 and 345 may be omitted.

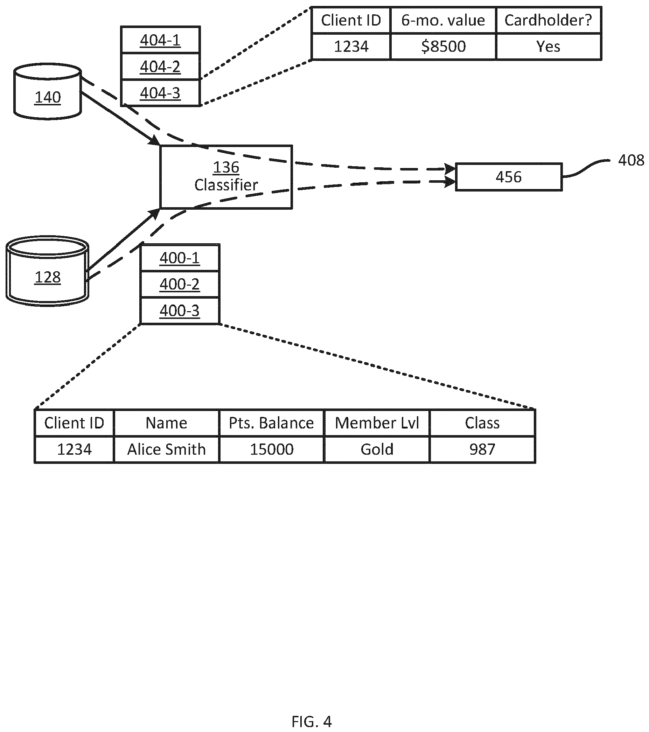

Turning to FIG. 4, example performances of blocks 340 and 345 are shown. In particular, the classifier 136 is configured to retrieve (at block 340) a set of profiles 400-1, 400-2, and 400-3 (referred to collectively as profiles 400, and generically as a profile 400; this nomenclature may also be used for other components herein) from the profile repository 128, e.g., for a selected set of client identifiers. Each profile 400 can include various information therein. In the illustrated example, the profile 400-3 includes a client identifier "1234", a name of the corresponding traveler ("Alice Smith"), as well as a points balance associated with the client identifier, a membership level (e.g., for a rewards program or the like), and a current auxiliary classification attribute ("987"). A wide variety of other information may also be contained in the profiles 400.

FIG. 4 also illustrates the retrieval, at block 345, of additional data corresponding to the profiles retrieved at block 340. For example, the classifier 136 can retrieve auxiliary profiles 404-1, 404-2, and 404-3 from the auxiliary repository 140. As seen in FIG. 4, the auxiliary profile 404-3 contains the client identifier, as well as an amount spent by the corresponding traveler (e.g., on items purchased via the system 100) over the previous six months, and a status indicator defining whether the corresponding traveler is a cardholder for an affiliated credit card, or the like. As with the profiles 400, the auxiliary profiles 404 can contain a wide variety of other information, instead of or in addition to the examples shown in FIG. 4.

Returning to FIG. 3, at block 350, the classifier 136 is configured to generate an updated auxiliary classification attribute for each of the profiles retrieved at block 340. The generation of the updated auxiliary classification attribute can be implemented according to a wide variety of mechanisms. In some examples, the performance of block 350 includes receiving the updated auxiliary classification attribute as an input from either the input device 212, or from another process executed by the classifier 136. Such a process can include one or more machine learning algorithms, e.g., trained to classify client identifiers based on the profile data retrieved at blocks 340 and 345. For example, prior to deployment of the classifier 136, a suitable number of profile records in the repository 128 can be labelled manually with corresponding classes, and that set of labelled profile records can be provided to a training algorithm of the classifier 136. Through the training process, the classifier 136 can then determine model parameters that correctly predict the labelled classes from the training set of profile records.

At block 355, the classifier 136 is configured to return the updated auxiliary classification attribute(s) from block 350 to the profile database 128. However, as will be apparent, the performance of block 355 need not immediately follow the generation of the updated auxiliary classification attribute. Instead, the timing of transmission of updated auxiliary classification attributes from the classifier 136 to the profile repository 128 can be determined according to the determination at block 305 by the response generator 108.

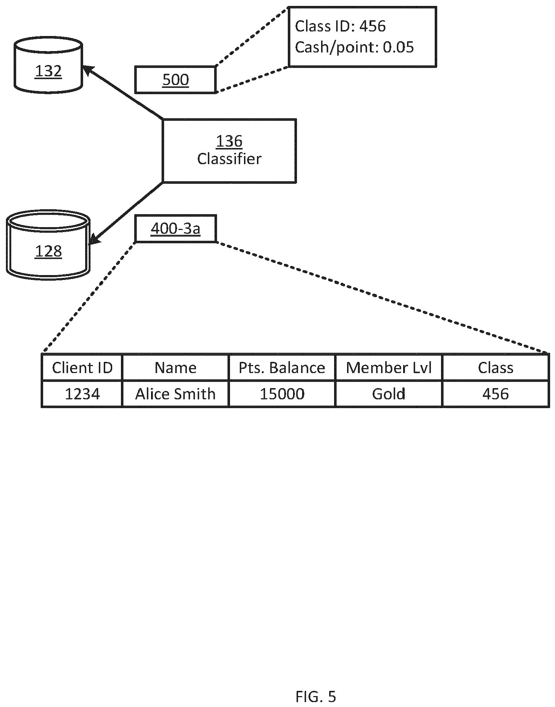

Referring again to FIG. 4, the classifier 136 generates an updated auxiliary classification attribute 408, with the value "456" for the client identifier "1234". FIG. 5 illustrates an example performance of block 355, which coincides with a performance of block 310 by the response generator 108. In particular, the classifier 136 transmits an updated profile 400-3a, in which the previous auxiliary classification attribute has been replaced with the value of the updated auxiliary classification attribute 408. In some examples, the classifier 136 can also provide updated conversion rules to the response generator 108, for storage in the repository of conversion rules 132.

In the example of FIG. 5, the classifier 136 transmits, in addition to the profile 400-3a, an updated conversion rule 500 for storage in the repository 132. The updated conversion rule 500 includes an identifier of the auxiliary classification attribute assigned to the client identifier "1234" (which may also be assigned to a variety of other client identifiers), as well as an exchange rate between the first and second exchange media ("cash/point"). The updated rule 500 can be obtained at block 350 along with the updated auxiliary classification attribute. In some examples, the updated rule 500 is a new rule (e.g., if the class "456" is new to the system 100). In other examples, the updated rule 500 replaces an existing rule corresponding to the same class. In further examples, the updated rule 500 can replace or otherwise update a rule in the repository 132 that previously referenced a different client attribute, such as the membership level mentioned earlier.

Returning to FIG. 3, following a synchronization with the classifier 136, or a negative determination at block 305, the response generator 108 is configured to receive a client request at block 315. The client request, as noted earlier, includes search parameters such as origin and destination locations, travel dates, numbers of passengers, a client identifier indicating the originator of the request, and the like.

At block 320, based on the request, the response generator 108 obtains a set of item identifiers and corresponding costs, in the cash-based medium of exchange. At block 325, for each item obtained at block 320, the response generator 108 (and in particular the converter 124) is configured to select a conversion factor, based on the rules in the repository 132 and at least the auxiliary classification attribute of the profile corresponding to the client identifier. In some examples, the conversion factor may be selected solely based on the auxiliary classification attribute (e.g. by referring solely to the rule 500 shown in FIG. 5). In further examples, the response generator 108 can be configured to determine, at block 325, whether to retrieve conversion rules from the repository 132 based on the auxiliary classification attribute, or based on a separate set of conversion rules that does not depend on the auxiliary classification attribute. For instance, the repository 132 can include both class-based rules and conventional non-class-based rules, and the response generator 108 can select between them on a per-request basis at block 325. In doing so, the response generator 108 can be enabled to collect transaction data for request handling processes in which the auxiliary classification attributes were and were not used, for comparison and subsequent updating of the class attributes. In other words, the outcome of requests handled without using auxiliary classification attributes (e.g., total revenue generated in association with such requests) can be compared with the outcome of requests handled using auxiliary classification attributes, to provide a feedback mechanism for classification of the profiles.

At block 330, the response generator 108 is configured to return the items (or at least a subset thereof) to the client device 104, along with the cost of each item in both exchange media. As will be apparent, following the transmission of search results at block 330, the response generator 108 may handle further requests from the client device 104, e.g., to purchase one or more of the items. Such downstream processes are not relevant to the discussion herein, and are therefore omitted.

The implementation of the classifier 136 (distinct from the response generator 108 and other highly scalable infrastructure in the system 100) and the use of auxiliary classification attributes for client profiles in the repository 128 reduces the technical impact of extending the functionality of the system 100 to provide more granular conversion factor selections by the response generator 108. For instance, the asynchronous (with request handling) generation of auxiliary classification attributes decouples the classifier 136 from the request-handling infrastructure, and simplifies the implementation of the classifier 136 and auxiliary repository 140. Further, the use of an auxiliary classification attribute for each profile in the profile repository 128 and the conversion rules 132, rather than each of the potentially numerous pieces of information from which the auxiliary classification attribute was derived, minimizes the additional storage and processing requirements imposed on the response generator 108.

The scope of the claims should not be limited by the embodiments set forth in the above examples, but should be given the broadest interpretation consistent with the description as a whole.

## Claims

1. A request-handling system, comprising:
a profile repository containing, for a client identifier, (i) a set of client attributes including an account balance defined in a first exchange medium, and (ii) an auxiliary classification attribute;
a response generator configured to receive a request containing search parameters from a client device corresponding to the client identifier, and, synchronously with the request, to:
(i) obtain, based on the search parameters, an item identifier and an item cost in a second exchange medium;
(ii) select, based on the auxiliary classification attribute, a conversion factor between the first exchange medium and the second exchange medium; and
(iii) send a response to the client device, the response containing the item identifier, the item cost, and a converted item cost in the first exchange medium, according to the conversion factor; and
a classifier configured, asynchronously with the request, to generate an updated auxiliary classification attribute, and replace the auxiliary classification attribute in the repository with the updated auxiliary classification attribute.

2. The system of claim 1, wherein the response generator is configured to obtain the item identifier based on the client attributes and the search parameters.

3. The system of claim 1 or 2, wherein the response generator is configured to select the conversion factor based on the search parameters, the auxiliary classification attribute, and the set of client attributes.

4. The system of one of the claims 1 to 3, wherein the auxiliary classification attribute is selected from a set of auxiliary classification attributes; and wherein the profile repository contains, for each of a plurality of additional client identifiers, a corresponding set of client attributes and a selected one of the auxiliary classification attributes.

5. The system of claim 4, wherein the classifier is configured to generate an updated auxiliary classification attribute, by:
obtaining a copy of the set of client attributes; and
selecting the updated auxiliary classification attribute from the set of auxiliary classification attributes based on the set of client attributes.

6. The system of one of the claims 1 to 5, wherein the response generator is configured to select the conversion factor based on a plurality of conversion rules corresponding to respective search parameters, auxiliary classification attributes, and client attributes.

7. The system of one of the claims 1 to 6, wherein the classifier is configured to generate an updated conversion factor, and provide the updated conversion factor to the response generator.

8. The system of claim 7, wherein generation of the updated conversion factor is asynchronous with receipt of the request.

9. The system of claim 7, wherein the classifier is further configured, in order to generate the updated conversion factor, to obtain a set of historical transaction data.

10. A method, comprising:
storing, in a profile repository, for a client identifier, (i) a set of client attributes including an account balance defined in a first exchange medium, and (ii) an auxiliary classification attribute;
at a response generator, receiving a request containing search parameters from a client device corresponding to the client identifier, and synchronously with the request:
(i) obtaining, based on the search parameters, an item identifier and an item cost in a second exchange medium;
(ii) selecting, based on the auxiliary classification attribute, a conversion factor between the first exchange medium and the second exchange medium; and
(iii) sending a response to the client device, the response containing the item identifier, the item cost, and a converted item cost in the first exchange medium, according to the conversion factor; and
at a classifier, asynchronously with the request:
generating an updated auxiliary classification attribute; and
replacing the auxiliary classification attribute in the repository with the updated auxiliary classification attribute.

11. The method of claim 10, wherein the obtaining the item identifier includes obtaining the item identifier based on the client attributes and the search parameters.

12. The method of claim 10 or 11, wherein selecting the conversion factor is based on the search parameters, the auxiliary classification attribute, and the set of client attributes.

13. The method of one of the claims 10 to 12, wherein the auxiliary classification attribute is selected from a set of auxiliary classification attributes; and
wherein the profile repository contains, for each of a plurality of additional client identifiers, a corresponding set of client attributes and a selected one of the auxiliary classification attributes.

14. The method of claim 13, wherein generating the updated auxiliary classification attribute comprises:
obtaining a copy of the set of client attributes; and
selecting the updated auxiliary classification attribute from the set of auxiliary classification attributes based on the set of client attributes.

15. The method of one of the claims 10 to 14, wherein selecting the conversion factor is based on a plurality of conversion rules corresponding to respective search parameters, auxiliary classification attributes, and client attributes.
